# EUROPEAN PATENT SPECIFICATION

(11) **EP 2 094 110 B1**
(45) Date of publication and mention of the grant of the patent: **01.04.2020**
(21) Application number: 07851911.3
(22) Date of filing: 14.12.2007
(51) Int. Cl.: A23L 27/10, A23L 2/395, A23F 3/40, A23P 10/30, A23L 2/56

(54) **COLOUR-COATED FLAVOUR ENCAPSULATE PARTICLES**
FARBBESCHICHTETE PARTIKEL MIT VERKAPSELTEM GESCHMACK
PARTICULES CONTENANT UN GOÛT ET REVÊTUES DE COULEUR

(30) Priority: 19.12.2006 EP 06126501
(43) Date of publication of application: 02.09.2009
(73) Proprietor: Givaudan S.A., 1214 Vernier (CH)
(72) Inventor: CAMPANILE, Fabio, 1015 JK Amsterdam (NL); WITTEVEEN, Frans, 3833 CM Leusden (NL); VROLIJKEN, Carol, 1411 GP Naarden (NL)
(74) Representative: Global Patents
(86) International application number: PCT/NL2007/050651
(87) International publication number: WO 2008/075945

(56) References cited:
- EP-A- 0 499 858
- WO-A-00/57713
- WO-A-01/62105
- WO-A-02/49450
- WO-A-2006/113265
- US-A- 3 914 439
- US-A- 4 076 847

## Description

### Field of the Invention

The present invention relates to the field of flavoured particulate food and/or beverage compositions. More in particular it relates to such compositions incorporating flavour encapsulate particles, which have been adapted in such a way that they appear to be similar to the particles contained in said food or beverage compositions as used without additional flavouring. The flavour encapsulate particles of the invention have a shape and colour resembling that of the other particles contained in the food or beverage compositions, such that they can be blended uniformly therewith without significantly altering the visual appearance thereof. Especially, incorporation of the flavour encapsulate particles in the composition does not cause any speckled, non-uniform appearance thereof. The invention provides for the first time, the aforementioned compositions, the flavouring encapsulate particles contained therein as well as methods of producing them.

### Background of the Invention

Flavours, typically volatile aromatic substances, are used as additives in many food and beverage products. The incorporation of flavour substances in foods has been the subject of intensive research within the flavour and food industry. One problem often encountered is the sensitivity of a large number of flavourings to oxygen degradation leading to off-flavour development, diminishing consumer's acceptance of the products incorporating such flavours. In addition, due to the volatile nature of most flavourings there is a need for providing them in vehicles that are able to retain the flavour for a sufficient amount of time, i.e. during storage of the flavouring composition or the product in which it is incorporated, and releasing the flavour under conditions characteristic of the use of said product. The application of encapsulating techniques has been employed to achieve these objectives.

A suitable example of such encapsulation can be found in WO 02/47492, wherein a moisture and oxygen stable composition is described comprising inert core particles partially or completely coated with at least one active compound encapsulated in a carbohydrate matrix comprising a high molecular weight film forming carbohydrate in combination with mono, di and/or trisaccharides and maltodextrin brought into the form of a glassy state.

US 4,067,847 discribes flavour containing granules coated on the outer surface with a powdered beverage.

US 3,914,439 describes a dry particulate flavour composition in which a liquid flavor oil is encapsulated within a particulate and coated with protective layer of an edible shellac.

WO 00/57713 describes encapsulated flavour particles, which are bonded to a porous carrier, such as a tea.

EP 0 499 858 describes particulated micro-encapsulated flavor particles which are mixed with a fat, oil and/or emulsifier until they increase their mean size.

WO 2006/113265 describes encapsulated particles for flavouring candy.

When incorporating flavour encapsulates into a particulate food or beverage composition problems may arise. In particular, flavour encapsulate particles not having the same shape and/or colour, will typically adversely affect the appearance of the food or beverage compositions, e.g. they will give rise to a speckled non-uniform looking product.

In trying to overcome these difficulties it is preferable not to employ any ingredients that negatively influence the flavour of the product and/or that give rise to food-additive regulatory issues. For example, the use of various dyestuffs for colouring food encapsulate particles would not be acceptable in a large number of countries. It is particularly desirable that a 'natural character' of the flavouring composition is preserved.

The aforementioned problems have been addressed in U.S. patent no. 4,076,847, which describes a beverage composition comprising flavour containing granules having a size within the range of 0.5-2 mm, coated on the outer surface with a powdered beverage. The basis of said granules is normally a long chain polysaccharide such as dextrose, gum acacia or other carrier materials. These granules are coated with a tea powder having a particle size within the range of 40 to 250 microns, e.g. in a rotating granulator. However, it was found that the invention of US 4,076,847 does not sufficiently solve the aforementioned problems due to the fact that the agglomerated matrices do not resemble the particles constituting the tea composition in shape, which still gives the product a non-natural appearance. Specifically in the case of large tea leaves as for instance used in lose tea, it is not possible to blend such agglomerates hiding completely from the rest of the particles. In addition it was found that the use of tea powder as a coating results in a rather rough coating surface which is still visibly distinct from the surface of the tea leaves.

Hence, there is still a need for improved flavour encapsulate particles that can be used to flavour particulate food and beverage compositions, without significantly altering the visual appearance of such compositions. It is an object of the present invention to provide such flavour encapsulate particles and compositions containing them.

### Summary of the Invention

These and further objects have been realized by the present invention by providing flavour encapsulate particles comprising a core particle coated with an inner coating layer comprising one or more flavourings contained in a carrier matrix and an outer coating layer comprising a substantial amount of an extract of a plant material. The core particle is a plant material, and the outer coating comprises at least 80 wt.% of an extract of the core particle material.

In addition, flavoured particulate food and beverage compositions are provided by the invention, comprising said flavour encapsulate particles. By the presence of the outer coating which will contain substantial amounts of colouring substances naturally present in the plant material, flavour encapsulate particles can be designed, the colour and shade of which will not be visibly distinct from that of the other particles present in the food or beverage composition.

It was furthermore found that by applying the outer coating as a liquid extract, the outer surface of the colour-coated particle is much smoother than in case an outer coating is applied in the form of a free flowing powder, which gives a rather rough surface. As will be appreciated by the skilled person, roughness/smoothness of the surfaces will significantly affect the shade and colour observed, e.g. due to differences in reflection/diffraction of light shed thereon.

The presence of the core particle allows for the shape of flavour encapsulate particles to be substantially the same as that of the other particles comprised in the particulate food or beverage composition, i.e. by manipulating the shape and diameter of the core particle, flavour encapsulate particles can be designed to have substantially the same shape and diameter as said other particles. It is especially preferred to employ core particles that have substantially the same shape and substantially the same diameter as said other particles. The use of granulates and/or agglomerates as taught by the prior art, was found not easily, if at all, to allow for the shape of the flavour encapsulate particle to resemble that of particulate food or beverage compositions, especially not that of tea leaf compositions.

Preferred embodiments of the invention are also provided wherein the core particle applied in the flavour encapsulate particle are of the same type as the particles comprised in the particulate flavour or beverage composition wherein the flavour encapsulate particles are to be applied.

Preferred embodiments of the invention are also provided wherein the plant extract comprises an extract of the particulate food or beverage material wherein the flavour encapsulate particle are to be applied.

### Detailed Description of the Invention

The invention is defined by the claims. Hence, a first aspect of the present invention relates to a flavour encapsulate particle comprising a core particle an inner coating layer comprising a flavour carrier matrix and one a flavouring, and an outer coating layer comprising at least 80 wt.%, calculated on a dry weight basis, of an extract of a plant material, wherein the core particle is a plant material and wherein the outer coating comprises at least 80 wt % of an extract of the core particle material.

The term "flavour encapsulate particle" is used herein refers to particles wherein one or more flavourings are encapsulated in a matrix material that is capable of on the one hand retaining the flavour and providing sufficient protection against degradation, e.g. oxidation, and, on the other hand, of releasing sufficient amounts of said one or more flavourings under the conditions under which the products wherein the particles have been incorporated, are typically used or consumed.

The term "comprising" whenever used in this document is intended to indicate the presence of stated features, integers, steps, components, but not to preclude the presence or addition of one or more other features, integers, steps, components or groups thereof.

In accordance with the present invention the core particle can be any type of particle, typically having a diameter within the range of 50 - 5,000 µm, preferably within the range of 125-3,000 µm, more preferably within the range of 250-2,000 µm and most preferably within the range of 300-1,500 µm. The term "diameter" is used here in its usual sense when referring to fine particles, to mean the largest dimension, and it does not connote a spherical particle shape. As noted before, in accordance with a preferred embodiment of the invention, the core particle is of the same type as the other particles normally contained in the food or beverage composition wherein the flavour encapsulate particle is to be incorporated. Suitable examples of such compositions include tea compositions, ground coffee, powder coffee, cacao compositions, seasonings, powder beverages and powder desserts. Furthermore, the invention is most suitably applied in those cases wherein the core particles are inert, i.e. wherein the core particles do not interact or react with any of the one or more flavourings and/or the flavour carrier matrix material(s) and are able to withstand the conditions under which the aforementioned at least two coating layers are to be applied, typically conditions of increased moist and temperature, as will be explained in more detail hereafter.

In the flavour encapsulate particles as defined hereinbefore, the core particle is a plant material, more preferably a plant material selected from the group of ground tea leaf, coffee powder, dry coffee particles, ground herbs, such as basil, parsley and ground spices. In an even more preferred embodiment of the invention flavour encapsulate particles as defined hereinbefore are provided, wherein the core particle is ground tea leaf, ground herb or ground coffee, most preferably ground tea leaf.

As used herein, the term 'plant material' refers to any part of a plant or a portion thereof, such as leafs, e.g. in the case of tea, malt and herbs, and seeds, e.g. in the case of coffee, cacao and spices such as pepper, sesame, mustard, and caraway. Such plant materials may typically be obtained by drying and optionally grinding the desired parts of said plant, as will be understood by the skilled person.

The terms 'inner' and 'outer' are used herein in their normal meaning, to indicate the position of the coating layer comprising the flavour carrier matrix and one or more flavourings relative to the coating layer comprising the extract of the core particle material. It is specifically noted that the term 'inner' refers to any part of the particle between the core particle and the layer forming the outmost surface of the coated core particle. Hence, as will be understood by the skilled reader, further coating layers can be comprised between the core particle and the coating layer comprising the flavour carrier matrix and one or more flavourings as well as between the latter and the coating layer comprising the extract of a plant material, if desired, without departing from the scope of the invention.

The flavour carrier matrix can typically comprise any substance or combination of substances that can be used for forming a matrix wherein flavourings can be retained as long as the matrix remains intact, said matrix typically having sufficient barrier function to prevent flavouring molecules leaking out of the matrix in substantial amounts and to prevent oxygen from penetrating the matrix in substantial amounts. Typically such a matrix comprises a continuous network of polymers entrapping dispersed droplets wherein the one or more flavourings are dissolved. Suitable examples thereof include carbohydrate polymer networks, e.g. comprising a hydrocolloid selected from the group consisting of xanthan, agar, locust bean gum, guar gum, cassia gum, tara gum, gum tragacanth, oat gum, karaya gum, gum arabic, gum ghatti, polydextrose, cyclodextrin, native gellan, deacylated gellan, gelatin, alginate, propylene glycol alginate, pectin, carrageenan, furcelleran, microcrystalline cellulose, processed eucheuma seaweed, sodium carboxymethylcellulose, methylcellulose and other modified cellulose derivatives, native starch, modified starch, whey proteins, caseinates, and mixtures thereof, entrapping flavour oil droplets.

Hence, in a preferred embodiment of the invention, a flavour encapsulate particle as defined hereinbefore is provided, wherein the flavour carrier matrix comprises a carbohydrate or a mixture of carbohydrates.

In an even more preferred embodiment of the invention, a flavour encapsulate particle as defined hereinbefore is provided, wherein said flavour carrier matrix comprises a high molecular weight film forming carbohydrate. Suitable high molecular weight film forming carbohydrates include gums, pectins, alginates, mucilages and mixtures thereof. Preferably the film forming carbohydrates are selected from gum arabic, gum acacia, tragacanth, karaya, ghatti, agar, alginates, carrageenans, fucellan, psyllium, modified starches, gelatin, dextran, xanthan, curdlan, cellulose, methylcellulose, ethylcellulose, hydroxyethylcellulose, hydroxypropyl cellulose, hydroxypropyl methylcellulose, carboxymethyl cellulose, low methoxy pectin, propylene glycol alginate and mixtures thereof. Most preferably the film forming carbohydrates are selected from the group of film forming gums, hydrocolloids and lipophilically modified starches. Preferred examples of gums are gum arabic and gum acacia. Preferred examples of suitably chemically modified starches are Capsul® and N-Lok (National Starch). Mixtures of film forming carbohydrates can be used in the compositions according to the invention.

In a particularly preferred embodiment of the invention said flavour carrier matrix includes from 0.1 to 100 wt.%, preferably from 10 to 90 wt.%, more preferably from 40 to 80 wt.%, most preferably 50-70 wt.% of a high molecular weight film forming carbohydrate, based on the total weight of the flavour carrier matrix.

In another equally preferred embodiment of the invention, flavour encapsulate particles as defined hereinbefore are provided, wherein the carrier matrix comprises mono, di and/or trisaccharides, typically in an amount of between 0.1 and 50 wt.%, preferably 1-40 wt.%, more preferably 5-30 wt.% and most preferably 10-25 wt.%, based on the total weight of the flavour carrier matrix. Illustrative examples of mono, di and trisaccharides suitable for the purposes of the present invention are glucose, fructose, maltose, sucrose, raffinose, sorbitol, xylitol and materials having a high content of such sugars like fruit juice solids. Preferably, at least 50 wt.% of the mono, di and trisaccharide material is a disaccharide, since high amounts of monosaccharide may result in a somewhat sticky product whereas a high amount of trisaccharide may lead to a product more prone to oxidation. In a preferred embodiment according to the invention the mono, di and trisaccharide material is sucrose.

For sugar free applications it may be desirable not to include substantial amounts of sugar in the flavour encapsulate particles of the invention. It was found that the present flavour carrier matrix may suitably contain between 1 and 30 wt.% of a sweetener selected from the group consisting of sorbitol, mannitol, xylitol, hydrogenated starch hydrolysates, lactitol, maltitol, erythritol, hydrogenated isomaltulose and combinations thereof, without negative impact on oxidation stability, mainly due to the adverse effect on the glass transition temperature of the carrier system. Preferably the amount of sweetener in the flavour carrier matrix is at least 5 wt.%, more preferably at least 10 wt.%. Typically, the amount of sweetener does not exceed 25 wt.%, most preferably it does not exceed 20 wt.%.

Yet in another, equally preferred embodiment of the invention, flavour encapsulate particles as defined hereinbefore are provided, wherein the flavour carrier matrix comprises maltodextrin, typically in an amount of between 0.1 and 40 wt.%, preferably of between 1 and 30 wt.%, most preferably between 5 and 25 wt.%, based on the total weight of the flavour carrier matrix. The maltodextrin will preferably have a dextrose equivalent (DE) in the range of 1 to 25, most preferably in the range of 10 to 20. A variety of maltodextrins meeting the above requirements are readily available commercially, including maltodextrins from e.g. tapioca, maize and potato.

In a particularly preferred embodiment of the invention, flavour encapsulate particles as defined hereinbefore are provided, wherein the flavour carrier matrix comprises a combination of one or more high molecular weight film forming carbohydrates, one or more mono-, di-, and/or trisaccharides and maltodextrin. Most preferably said flavour carrier matrix comprises a combination of 10-90 wt.% of one or more high molecular weight film forming carbohydrate, 1-40 wt.% of one or more mono-, di-, and/or trisaccharides and 1-30 wt.% maltodextrin, all calculated on the total weight of the flavour carrier matrix material. It was surprisingly found that besides providing sufficient flavour retention and protection, the aforementioned flavour carrier matrix also advantageously provides a very suitable primer layer for the outer coating layer comprising the plant extract. More in particular said matrix provides a primer layer on which the plant extract soluble solids adhere very effectively such that a smooth, dense outer coating can suitably be formed thereon.

The flavour carrier matrix may be softened by the incorporation of up to 5 wt.% of an edible polyol such as glycerol, preferably 1 to 3 wt.%, based on the carbohydrate matrix. Also other components like anti-foam agents in an amount of up to 0.2 %o may be added.

As used herein the term "flavouring" is meant to encompass any food grade substance or compound that is capable of imparting a detectable flavour impact, typically at concentrations below 0.1 wt.%, more preferably below 0.01 wt.%. Suitable examples of flavourings include alcohols, aldehydes, ketones, esters, ethers, acetates, nitriles, terpene hydrocarbons, nitrogenous or sulphurous heterocyclic compounds and essential oils, and said flavourings can be of natural or synthetic origin. Many of these are listed in reference texts such as the book by S. Arctander, Perfume and Flavor Chemicals, 1969, Montclair, New Jersey, USA, or its more recent versions, or in other works of a similar nature, as well as in the abundant patent literature in the field of flavours. It will be clear to the skilled person that the type of flavouring added would entirely depend on the type of product to which the composition is added.

Examples of flavour ingredients which may be used within the scope of the invention are: geraniol, geranyl acetate, linalool, linalyl acetate, tetrahydrolinalool, citronellol, citronellyl acetate, dihydro myrcenol, dihydro myrcenyl acetate, tetrahydro myrcenol, terpineol, terpinyl acetate, nopol, nopyl acetate, 2-phenylethanol, 2-phenylethyl acetate, benzyl alcohol, benzyl acetate, benzyl salicylate, styrallyl acetate, benzyl benzoate, amyl salicylate, dimethylbenzyl carbinol, trichloromethylphenylcarbinyl acetate, p-tert. butylcyclohexyl acetate, isononyl acetate, vetiveryl acetate, vetiverol, α-hexyl-cinnamaldehyde, 2-methyl-3-(p-tert.butylphenyl)-propanal, 2-methyl-3-(p-isopropyl phenyl)-propanal, 3-(p-tert.butylphenyl)-propanal, tricyclodecenyl acetate, tricyclo-decenyl propionate, 4-(4-hydroxy-4-methylpentyl)-3-cyclohexene carbaldehyde, 4-(4-methyl-3-pentenyl)-3-cyclohexene carbaldehyde, 4-acetoxy-3-pentyl-tetrahydropyran, 3-carboxymethyl-2-pentyl-cyclopentane, 2-n-heptyl-cyclopentanone, 3-methyl-2-pentyl-2-cyclopentanone, n-decanal, n-dodecanal, dec-9-en-1-ol, phenoxy-ethyl isobutyrate, phenylacetaldehyde dimethylacetal, phenyl-acetaldehyde diethylacetal, geranyl nitrile, citronellyl nitrile, cedryl acetate, 3-iso-camphyl cyclohexanol, cedrylmethyl ether, isolongifolanone, aubepine nitrile, aubepine, heliotropine, coumarin, eugenol, vanillin, diphenyl oxide, hydroxy citronellal, ionones, methyl ionones, isomethyl ionones, irones, cis-3-hexenol and esters thereof, macrocyclic ketones, macrolactone, and ethylene brassylate.

In one particularly preferred embodiment of the invention flavour encapsulate particles as defined hereinbefore are provided comprising essential oils, like bergamot oil, citrus oil, e.g. lemon oil, orange oil, grapefruit oil and/or volatile flavourings such as citrus flavouring, orange flavouring, strawberry flavouring, raspberry flavouring, kiwi flavouring, etc. According to this embodiment the flavour encapsulate particles typically constitute tea flavouring compositions, such that the core particle is typically a tea leaf portion.

In another preferred embodiment of the present invention, the flavour encapsulate particles comprise one or more flavourings that are particularly sensitive to oxidation and that produce oxidation products with a pronounced undesirable flavour impact. Typical examples of such oxidation sensitive flavour and fragrance ingredients include limonene, citral and linalool. Consequently, in a preferred embodiment, the present composition contains limonene, citral and/or linalool as an active compound. It is particularly preferred that in case such oxidation sensitive substances are incorporated in the flavour encapsulate particles, the flavour carrier matrix comprises the afore defined combination of one or more high molecular weight film forming carbohydrates, one or more mono-, di-, and/or trisaccharides and maltodextrin. In a particularly preferred embodiment, these substances are introduced into the present composition in the form of a citrus oil or a mint oil, most preferably in the form of a citrus oil.

In a preferred embodiment of the invention, a flavour encapsulate particle as defined hereinbefore is provided, wherein said inner coating layer comprises 1-50 wt.% of one or more flavourings and 50-99 wt.% of the flavour carrier matrix, calculated on the total weight of said coating layer. Even more preferably the afore defined inner coating layer comprises 2-40 wt.%, even more preferably 5-35 wt.% of the one or more flavourings. The amount of flavour carrier matrix comprised in said coating layer more preferably lies within the range of 60-98 wt.%, most preferably within the range of 65-95 wt.%.

Yet, in another preferred embodiment of the invention the ratio of flavourings to flavour carrier matrix contained in the inner coating layer lies within the range of 0.01-1.0, more preferably within the range of 0.1-0.75, most preferably within the range of 0.2-0.5, calculated on total weight of said flavourings and the flavour carrier matrix.

It is noted that the thickness of the inner coating layer can be varied as desired, as will be understood by the skilled person. However, since it is an object of the invention to provide flavour encapsulate particles that are not visibly distinct from the other particles contained in the food or beverage composition of the invention, the thickness must typically be such that the overall size of the flavour encapsulate particle does not significantly exceed the average diameter of the largest 10 % of the uncoated food or beverage particles. Hence, in still another preferred embodiment of the present invention flavour encapsulate particles are provided as defined hereinbefore, wherein the ratio of the inner coating layer weight to the core particle weight is within the range of 0.1-1.0, preferably it is within the range of 0.25-0.9, most preferably it is within the range of 0.5-0.75. It is furthermore preferred that the coating is uniformly distributed over the core particle, such that at least 50 %, preferably at least 75 %, more preferably at least 90 % and most preferably at least 99 % of the total surface of the core particle is covered by the inner coating layer.

As defined hereinbefore, the flavour encapsulate particle comprises an outer coating layer containing at least 80 wt.%, preferably 90-100 wt.%, more preferably 95-100 wt.%, most preferably 99-100 wt.%, calculated on a dry weight basis, of an extract of the core particle material.

As mentioned hereinbefore, the flavour encapsulate particle of the current invention comprises an outer coating layer, comprising at least 80 wt.%, calculated on a dry weight basis, of an extract of a plant material. As used in this context, the term 'an extract of a plant material', refers to compositions containing fractions of the soluble materials contained in said plant materials, wherein a plant material may encompass any part of a plant, such as leaf, stem, root, seed and the like.

Such fractions may be extracted from the plant material using an aqueous phase or an organic solvent or combinations of aqueous and/or organic solvents, preferably an aqueous extract is used in accordance with the invention. As will be explained hereafter such extracts are applied to the core particle as a liquid, in order to attain the desired smooth appearance of the surface, instead of a rough grainy surface which is generally obtained when applying said outer coating a powdered.

In the flavour encapsulate particle as defined hereinbefore, the outer coating comprises at least 80 wt.% of an extract of the core particle material.

'An extract of the core particle material' as used herein encompasses compositions containing fractions of the soluble components contained in the core particles. As explained above, the extract of the core particle material is preferably an aqueous extract.

As noted before, in accordance with the invention, the core particle material is a plant material, more preferably a plant material selected from the group of ground tea leaf, coffee powder, dry coffee particles, ground herbs, such as basil, parsley and ground spices. Hence, in a preferred embodiment of the invention said extract of a plant material is selected from the group consisting of extracts of tea leafs, coffee beans, cacao beans, malt leafs, herbs and spices. It is noted that, as will be understood by the skilled person, an extract of the core particle material means that the extracts are produced from the same type of particles as the particles used as a core material; it does not imply that the extracts are produced exactly from those particles that are actually coated in accordance with the invention.

It is furthermore noted that the thickness of the outer coating layer can be varied as desired, as will be understood by the skilled person. However, since it is an object of the invention to provide flavour encapsulate particles that are not visibly distinct from the other particles contained in the food or beverage composition of the invention, i.e. the uncoated food or beverage particles, the thickness of the outer coating must typically be such that the overall size of the flavour encapsulate particle does not significantly exceed the average diameter of the largest 10 % of the uncoated food or beverage particles, whereas on the other hand it is sufficient for rendering the overall colour impression and shade of the particle undistinguishable, i.e. by the bare eye, from that of the uncoated food or beverage particles. Hence, in still another preferred embodiment of the present invention flavour encapsulate particles are provided as defined hereinbefore, wherein the ratio of the outer coating layer weight to the inner coating layer weight is within the range of 0.02-2.0, preferably it is within the range of 0.04-1.0, most preferably it is within the range of 0.05-0.25. It is furthermore preferred that the coating is uniformly distributed over the inner coating layer, such that at least 75 %, preferably at least 90 %, more preferably at least 95 % and most preferably at least 99 % of the total surface of the particle is covered by the outer coating layer.

Another aspect of the invention relates to a method of producing a flavour particle as defined hereinbefore.

As noted before, the outer coating comprising an extract of a plant material is applied as a liquid extract, preferably an aqueous extract, more preferably a concentrated aqueous extract thereof. As used herein, the term 'concentrated' is to be understood to refer to a soluble solid content range of between 10 and 99 wt.%, preferably 10-80 wt.%, most preferably 20-75 wt.%, based on the total weight of the extract. Hence, in a preferred embodiment of the invention, a method is provided as defined hereinbefore, wherein the outer coating layer is applied in the form of a concentrated liquid extract of said core particle material, more preferably in the form of a liquid extract having a soluble solids content within the range of 10-80 wt.%. The term 'soluble', as used herein in relation to the contents of the plant material extracts refers to the ability of said contents to dissolve in aqueous systems in significant amounts. Preferably the aforementioned soluble solids have high solubility, e.g. at least about 0.1 g of solute dissolves in 100 ml of solvent(s), preferably at least about 1 g of solute dissolves in 100 ml solvent(s), at 70 °C and 1 atm pressure.

The products according to the invention can be produced by any process which is known by the skilled person to be suitable for applying a coating layer on a core particle. Suitable examples of such process include fluidised bed coating, drum drying, high shear granulation, extrusion, etc. Most preferably, the products according to the invention are produced by means of a fluidised bed process. Hence, a preferred embodiment of the invention provides a method as defined hereinbefore, wherein said outer, coating layer is applied using fluid bed coating, drum drying, high shear granulation or extrusion, preferably using fluid bed coating.

More in general, the fluidised bed process may be carried out by spraying an emulsion of one or more of the flavourings and the flavour carrier matrix in water into a fluidised bed agglomerator, which has previously been charged with a quantity of inert core particles. The emulsion containing one or more of the flavourings and the flavour carrier matrix coats the core particles fluidised by the passage of air through the bed. Since the residence time in the fluidised bed is controllable, the spraying of the emulsion may be continued until the required particle size or coating layer thickness has been obtained. Once obtained, the liquid extract of a plant material is introduced in the fluidised bed until the required level of extracted plant material is deposited onto the surface of the flavour encapsulate particle.

In another embodiment, a particularly suitable process for producing the flavour encapsulate particles of the invention is provided, comprising the steps of:
a) forming an aqueous solution containing the one or more flavour carrier matrix material(s),
b) incorporating at least one flavouring into the solution of step (a),
c) introducing the aqueous solution of step (b) into a fluidised bed comprising the core particles, preferably using an inlet air temperature of 40 - 120 °C, more preferably 60 - 100 °C, to obtain a core particle coated with the one or more flavourings encapsulated in the flavour carrier matrix; and
d) introducing after step (c) the liquid extract of the plant material into the fluid bed comprising the flavour coated core particles, preferably employing an inlet air temperature of 40 - 120 °C, more preferably 60 - 100 °C, to obtain a smooth continuous layer of the extract material on the surface of the particles.

In another preferred embodiment of the invention, a method as defined hereinbefore is provided, comprising the steps of:
a) forming an aqueous solution containing a carbohydrate mixture of 10-90 wt.% of one or more high molecular weight film forming carbohydrates, 1-40 wt.% of one or more mono-, di-, and/or trisaccharides and 1-30 wt.% maltodextrin, all calculated on the total weight of the flavour carrier matrix materials;
b) incorporating at least one flavouring into the solution of step (a),
c) introducing the aqueous solution of step (b) into a fluidised bed comprising the core particles, preferably using an inlet air temperature of 40 - 120 °C, more preferably 60 - 100 °C, to obtain a core particle coated with the one or more flavourings encapsulated in a glassy state carbohydrate matrix; and
d) introducing after step (c) the liquid extract of plant material into the fluid bed comprising the flavour coated core particles, preferably employing an inlet air temperature of 40 - 120 °C, more preferably 60 - 100 °C, to obtain a smooth continuous layer of the extract material on the surface of the particles.

By "glassy state", it is meant a characteristic state associated with long chain molecules, such as polymers, whereby an amorphous solid is obtained whose behaviour resembles that of a glass.

In commercial practice, it is desirable to run the process as a continuous one, using equipment of appropriate size for the production required. Such continuous running tends to ensure the maximum uniformity of product. To achieve this, careful control of input spray rate, fluidisation air-flow rate and its temperature must be exercised.

The fluidised bed apparatus for use in this process can be any one of the conventional types which are commercially available, e.g. an apparatus selected from one of the following manufacturers, including Aeromatic AG of Muttenz in Switzerland and "Strea-1" laboratory agglomerator, also supplied by Aeromatic AG. Other useful agglomerators are supplied by the Calmic Division of William Boulton of Burslem, England and by the firm Glatt, Binzen, Germany.

A further aspect of the invention relates to products obtainable by any one of the processes as defined here above.

Yet another aspect of the invention relates to a flavoured particulate food or beverage composition comprising at least 25 wt.% of a particulate food or beverage material comprising particles having a mass weighted average diameter within the range of 50 - 5000 µm, and at least 0.5 wt.% of flavour encapsulate particles as defined hereinbefore.

In a preferred embodiment of the invention, a flavoured particulate food or beverage composition as defined hereinbefore is provided, wherein the mass weighted average diameters of said flavour encapsulate particles is within 50-200 %, more preferably within 66-150 %, still more preferably within 75-125 %, most preferably within 90-110 %, of that of the other particles comprised in the particulate food or beverage material. As mentioned before, it is preferred that the flavour encapsulate particles are not visibly distinct from the other particles contained in the particulate food or beverage composition. As will be understood by the skilled person, this is in particular achieved if the sizes of the flavour encapsulate particles and said other particles are not substantially different.

In another preferred embodiment of the invention, a flavoured particulate food or beverage composition as defined hereinbefore is provided, wherein said flavour encapsulate particles have substantially the same shape as the other particles comprised in the particulate food or beverage material.

As used herein "substantially the same shape", has the meaning that the overall shape of the particles, typically defined in terms of the relative lengths of the longest, shortest, and intermediate axes, on average does not differ substantially between said flavour encapsulate particles and the other particles comprised in the particulate food or beverage material. Typically said difference is not more than 50 %, preferably not more than 25 %, most preferably not more than 10 %. Particles can typically be described as having cylindrical, discoidal, spherical, tabular, ellipsoidal, prismatic, bladelike, elongated, convex, equant or irregular shape. As will be understood by the skilled person substantially the same shape also has the meaning that the same descriptor applies to the different types of particles.

In a preferred embodiment of the invention a flavoured particulate food or beverage composition as defined hereinbefore is provided, wherein said particulate natural food or beverage material is selected from the group of ground coffee, powder coffee, cacao compositions, seasonings, powder beverages and powder desserts as explained hereinbefore.

In a particularly preferred embodiment of the invention the core particles comprised in the flavour encapsulate particles are the same type of material as said other particles comprised in said particulate food or beverage composition. As will be understood by the skilled person, if the core particle is of the same type as the particles of which the food or beverage material is essentially made up, the shape and size of the flavour encapsulate particles will not be visibly distinct from the other particles present in the food or beverage composition, such that according to this embodiment the objects of the invention are realised most suitably. In a most preferred embodiment of the invention a composition is provided as defined hereinbefore, wherein the composition is a tea composition comprising ground tea leafs as well as flavour encapsulate particles in accordance with the invention, wherein the core particles are ground leafs, preferably ground tea leafs.

In another preferred embodiment of the invention, a flavoured particulate food or beverage composition as defined hereinbefore is provided, wherein the outer coating of the flavour encapsulate particles comprises an extract of the particulate food or beverage material. Since, according to this embodiment, the coating will comprise substantial amounts of the colouring substances naturally present in the particulate food or beverage material, the outer surface of the flavour encapsulate particle will have a colour and shade most closely resembling that of the other particles contained in said food or beverage material.

In another preferred embodiment of the invention, a flavoured particulate food or beverage composition as defined hereinbefore is provided, wherein the amount of flavour encapsulate particles ranges from 0.05-50 %, preferably from 0.1-40 %, most preferably from 0.5-25 %, based on the total weight of the composition.

In another preferred embodiment of the invention a flavoured particulate food or beverage composition as defined hereinbefore is provided, wherein the flavour carrier matrix comprises a carbohydrate or a mixture of carbohydrates, as defined hereinbefore, especially, wherein said flavour carrier matrix comprises a carbohydrate mixture of 10-90 wt.% of one or more high molecular weight film forming carbohydrates, 1-40 wt.% of one or more mono-, di-, and/or trisaccharides and 1-30 wt.% maltodextrin, all calculated on the total weight of the flavour carrier matrix materials.

In still another preferred embodiment of the invention a flavoured particulate food or beverage composition as defined hereinbefore is provided, wherein the said flavour coated particles are obtained by the any one of the processes as defined hereinbefore.

Still another aspect of the present invention relates to a method of improving the flavour of a particulate natural food or beverage material comprising particles having a mass weighted average diameter within the range of 50- 5,000 µm, the method comprising incorporating in said composition a sufficient amount of flavour encapsulate particles as defined hereinbefore and/or flavour encapsulate particles as obtainable by any one of the processes defined hereinbefore.

In a preferred embodiment of the invention a method as defined hereinbefore is provided, wherein the core particles of the flavour encapsulate material are of the same type as the particles comprised in said particulate natural food or beverage material, wherein said flavour encapsulate particles are incorporated.

The present invention as explained hereinbefore will now be illustrated by means of the following non-limiting examples.

### Examples

### Example 1:

A flavour encapsulate according to the invention is produced as follows. 600 g of tea leaf particles having diameters within the range of 250 to 1400 microns, was coated in a fluidised bed apparatus of the type GPCG 1, using a coating composition having the following composition:
100 g flavouring (bergamot flavouring)
300 g flavour carrier matrix, comprising 150 g capsul (National Starch), 50 g maltodextrin MD20 (DE 20) and 50 g sugar in 500 g water.

Once the first coating layer is applied, a solution containing green tea extract (by Plantextrakt GmbH & Co. KG) is sprayed around the flavour-coated particles in an amount equal to 333 g dry solid.

The conditions of the machine (GPCG1 apparatus) were as follows:
Feed temperature: 30 °C
Air inlet: 80-95 °C
Product temperature: 50-60 °C
Spray rate: 650g/min
Air rate: 1000 m³/hr

The particles obtained were added to standard black teas in amounts ranging from 1 to 15% in tea blends, forming the final mix which was evaluated by visual inspection and by sensorial analysis. It was concluded that the tea blend did not have a speckled appearance, moreover, the flavour encapsulate particles were not distinguishable from the other tea particles by the bare eye. The sensorial analysis of the tea prepared using the flavoured tea blend revealed that the flavour encapsulate particles released satisfactory amounts of the flavouring instantaneously.

### Example 2:

A basil flavoured (parsley) encapsulate according to the invention is produced using the same method and conditions as described in the previous example. The exact formulation of the encapsulate was as specified in the following table 1.

**Table 1**

| Product | Amount in % (wt.) |
|---|---|
| Parsley leaves to coat | 31 |

| **First Coating:** | |
|---|---|
| Water | 28 |
| Malto Dextrine MD10 | 6 |
| Capsul TA | 13 |
| Sugar | 6 |
| Basil flavour | 8.3 |

| **Second coating** | |
|---|---|
| Water | 5 |
| Capsul TA | 2 |
| Chlorophyl extract pdr | 0.7 |
| **Total** | **100%** |

### Example 3:

A cherry flavoured (hibiscus) encapsulate according to the invention is produced using the same method and conditions as described in example 1. The exact formulation of the encapsulate was as specified in the following table 2.

**Table 2**

| Product | Amount in % |
|---|---|
| Hibiscus flowers to coat | 31 |

| **First Coating** | |
|---|---|
| Water | 26 |
| Malto Dextrine MD10 | 6 |
| Capsul TA | 13 |
| Sugar | 4 |
| Vanilline | 0.2 |
| Elderberry juice | 3.8 |
| Cherry flavour | 8.3 |

| **Second Coating** | |
|---|---|
| Water | 5 |
| Capsul TA | 2 |
| Hibiscus soft extract pdr | 0.7 |
| **Total** | **100%** |

## Claims

1. Flavour encapsulate particle comprising a core particle, an inner coating comprising a flavour carrier matrix and a flavouring, and an outer coating layer comprising at least 80 wt.%, calculated on a dry weight basis, of an extract of a plant material, wherein the core particle is a plant material and wherein the outer coating comprises at least 80 wt.% of an extract of the core particle material.

2. Flavour encapsulate particle according to claim 1, wherein the extract of a plant material is an extract of tea, coffee, cacao, malt and/or herbs.

3. Flavour encapsulate particle according to claim 1 or 2, wherein the core particle is a plant material selected from the group of ground tea leaf, coffee powder, dry coffee particles, ground herbs, and ground spices.

4. Flavour encapsulate particle according to any one of the preceding claims, wherein the flavour carrier matrix comprises a carbohydrate or a mixture of carbohydrates.

5. Flavour encapsulate particle according to any one of the preceding claims, wherein said flavour carrier matrix comprises 10-90 wt.% of one or more high molecular weight film forming carbohydrates, 1-40 wt.% of one or more mono-, di-, and/or trisaccharides and 1-30 wt.% maltodextrin.

6. Flavour encapsulate particle according to any one of the preceding claims, wherein said inner coating comprises 1-50 wt.% of one or more flavourings and 50-99 wt.% of the flavour carrier matrix.

7. Flavoured particulate food or beverage composition comprising at least 25 wt.% of a particulate food or beverage material comprising particles having a mass weighted average diameter within the range of 50-5000 µm, and at least 0.5 wt.% of flavour encapsulate particles as defined in any one of claims 1-6.

8. Flavoured particulate food or beverage composition according to claim 7, wherein the mass weighted average diameter of said flavour encapsulate particles is within 50-200 % of that of the other particles comprised in the particulate food or beverage material.

9. Flavoured particulate food or beverage composition according to claim 8, wherein said flavour encapsulate particles have substantially the same shape as the other particles comprised in the particulate food or beverage material.

10. Flavoured particulate food or beverage composition according to any one of claims 7-9, wherein the core particles comprised in the flavour encapsulate particles are the same type of material as said other particles comprised in said particulate food or beverage composition.

11. Flavoured particulate food or beverage composition according to any one of claims 7-10, wherein the outer coating of the flavour encapsulate particle comprises an extract of the particulate food or beverage material.

12. Flavoured particulate food or beverage composition according to any one of claims 7-11, wherein said particulate food or beverage material is selected from the group of tea, ground coffee, powder coffee, cacao compositions, seasonings, powder beverages and powder desserts.

13. Method of producing a flavour particle according to any one of claims 1-6, comprising coating the core particle with the first coating comprising the flavour carrier matrix and the flavouring, and coating said flavour coated core particle with the further coating layer comprising at least 80 wt.% of the extract of the plant material.

14. Method according to claim 13, wherein said further coating layer is applied in the form of a concentrated liquid extract of said plant material.

15. Method according to claim 13 or 14, wherein said outer coating layer is applied using fluid bed coating, drum drying, high shear granulation or extrusion.

16. Method of improving the flavour of a particulate natural food or beverage material comprising particles having a mass weighted average diameter within the range of 50-5000 µm, the method comprising incorporating in said composition a sufficient amount of flavour particles as defined in any one of claims 1-6.

## Patentansprüche

1. Aromaverkapselungspartikel, umfassend ein Kernpartikel, eine innere Beschichtung, die eine Aromaträgermatrix und einen Aromastoff umfasst, und eine äußere Beschichtungsschicht, die wenigstens 80 Gew.-%, berechnet auf Trockengewichtbasis, eines Extrakts eines Pflanzenmaterials umfasst, wobei das Kernpartikel ein Pflanzenmaterial ist und wobei die äußere Beschichtung wenigstens 80 Gew.-% eines Extrakts des Kernpartikelmaterials umfasst.

2. Aromaverkapselungspartikel gemäß Anspruch 1, wobei der Extrakt eines Pflanzenmaterials ein Extrakt von Tee, Kaffee, Kakao, Malz und/oder Kräutern ist.

3. Aromaverkapselungspartikel gemäß Anspruch 1 oder 2, wobei das Kernpartikel ein Pflanzenmaterial ausgewählt aus der Gruppe von gemahlenen Teeblättern, Kaffeepulver, trockenen Kaffeepartikeln, gemahlenen Kräutern und gemahlenen Gewürzen ist.

4. Aromaverkapselungspartikel gemäß einem der vorstehenden Ansprüche, wobei die Aromaträgermatrix ein Kohlenhydrat oder ein Gemisch von Kohlenhydraten umfasst.

5. Aromaverkapselungspartikel gemäß einem der vorstehenden Ansprüche, wobei die Aromaträgermatrix 10-90 Gew.-% eines oder mehrerer filmbildender Kohlenhydrate mit hohem Molekulargewicht, 1-40 Gew.-% eines oder mehrerer Mono-, Di- und/oder Trisaccharide und 1-30 Gew.-% Maltodextrin umfasst.

6. Aromaverkapselungspartikel gemäß einem der vorstehenden Ansprüche, wobei die innere Beschichtung 1-50 Gew.-% eines oder mehrerer Aromastoffe und 50-99 Gew.-% der Aromaträgermatrix umfasst.

7. Aromatisierte partikelförmige Lebensmittel- oder Getränkezusammensetzung, die wenigstens 25 Gew.-% eines partikelförmigen Lebensmittel- oder Getränkematerials, das Partikel mit einem massegewichteten mittleren Durchmesser im Bereich von 50-5000 µm umfasst, und wenigstens 0.5 Gew.-% Aromaverkapselungspartikel gemäß einem der Ansprüche 1-6 umfasst.

8. Aromatisierte partikelförmige Lebensmittel- oder Getränkezusammensetzung gemäß Anspruch 7, wobei der massegewichtete mittlere Durchmesser der Aromaverkapselungspartikel im Bereich von 50-200 % von jenem der anderen Partikel, die im partikelförmigen Lebensmittel- oder Getränkematerial enthalten sind, liegt.

9. Aromatisierte partikelförmige Lebensmittel- oder Getränkezusammensetzung gemäß Anspruch 8, wobei die Aromaverkapselungspartikel im Wesentlichen die gleiche Form wie die anderen Partikel, die im partikelförmigen Lebensmittel- oder Getränkematerial enthalten sind, aufweisen.

10. Aromatisierte partikelförmige Lebensmittel- oder Getränkezusammensetzung gemäß einem der Ansprüche 7-9, wobei die Kernpartikel, die in den Aromaverkapselungspartikeln enthalten sind, der gleiche Typ von Material sind wie die anderen Partikel, die in der partikelförmigen Lebensmittel- oder Getränkezusammensetzung enthalten sind.

11. Aromatisierte partikelförmige Lebensmittel- oder Getränkezusammensetzung gemäß einem der Ansprüche 7-10, wobei die äußere Beschichtung des Aromaverkapselungspartikels einen Extrakt des partikelförmigen Lebensmittel- oder Getränkematerials umfasst.

12. Aromatisierte partikelförmige Lebensmittel- oder Getränkezusammensetzung gemäß einem der Ansprüche 7-11, wobei das partikelförmige Lebensmittel- oder Getränkematerial ausgewählt ist aus der Gruppe von Tee, gemahlenem Kaffee, Pulverkaffee, Kakaozusammensetzungen, Gewürzen, Pulvergetränken und Pulverdesserts.

13. Verfahren zur Herstellung eines Aromapartikels gemäß einem der Ansprüche 1-6, umfassend Beschichten des Kernpartikels mit der ersten Beschichtung, die die Aromaträgermatrix und den Aromastoff umfasst, und Beschichten des aromabeschichteten Kernpartikels mit der weiteren Beschichtungsschicht, die wenigstens 80 Gew.-% des Extrakts des Pflanzenmaterials umfasst.

14. Verfahren gemäß Anspruch 13, wobei die weitere Beschichtungsschicht in der Form eines konzentrierten flüssigen Extrakts des Pflanzenmaterials aufgebracht wird.

15. Verfahren gemäß Anspruch 13 oder 14, wobei die äußere Beschichtungsschicht unter Verwendung von Wirbelschichtbeschichtung, Trommeltrocknung, hochscherender Granulation oder Extrusion aufgebracht wird.

16. Verfahren zum Verbessern des Aromas eines partikelförmigen natürlichen Lebensmittel- oder Getränkematerials, das Partikel mit einem massegewichteten mittleren Durchmesser im Bereich von 50-5000 µm umfasst, wobei das Verfahren das Einverleiben einer ausreichenden Menge von Aromapartikeln gemäß einem der Ansprüche 1-6 in die Zusammensetzung umfasst.

## Revendications

1. Particule d'arôme encapsulé comprenant une particule de cœur, un revêtement interne comprenant une matrice véhicule d'arôme et un agent aromatisant, et une couche de revêtement externe comprenant au moins 80% en poids, calculé sur une base de poids sec, d'un extrait d'un matériel végétal, dans laquelle la particule de cœur est un matériel végétal et où le revêtement externe comprend au moins 80% en poids d'un extrait du matériau de particule de cœur.

2. Particule d'arôme encapsulé selon la revendication 1, dans laquelle l'extrait d'un matériel végétal est un extrait de thé, de café, de cacao, de malt et/ou d'herbes aromatiques.

3. Particule d'arôme encapsulé selon la revendication 1 ou 2, dans laquelle la particule de cœur est un matériel végétal choisi dans le groupe constitué par des feuilles de thé broyées, du café en poudre, des particules de café sèches, des herbes aromatiques moulues, et des épices moulues.

4. Particule d'arôme encapsulé selon l'une quelconque des revendications précédentes, dans laquelle la matrice véhicule d'arôme comprend un glucide ou un mélange de glucides.

5. Particule d'arôme encapsulé selon l'une quelconque des revendications précédentes, dans laquelle ladite matrice véhicule d'arôme comprend 10-90% en poids d'un ou plusieurs glucides filmogènes de haut poids moléculaire, 1-40% en poids d'un ou plusieurs mono-, di- et/ou trisaccharides et 1-30% en poids de maltodextrines.

6. Particule d'arôme encapsulé selon l'une quelconque des revendications précédentes, dans laquelle ledit revêtement interne comprend 1-50% en poids d'un ou plusieurs agents aromatisants et 50-99% en poids de la matrice véhicule d'arôme.

7. Composition d'aliment ou de boisson particulaire aromatisée, comprenant au moins 25% en poids d'un matériau d'aliment ou de boisson particulaire comprenant des particules ayant un diamètre moyen pondéré en masse dans la plage de 50-5000 µm, et au moins 0.5% en poids de particules d'arôme encapsulé telles que définies selon l'une quelconque des revendications 1-6.

8. Composition d'aliment ou de boisson particulaire aromatisée selon la revendication 7, dans laquelle le diamètre moyen pondéré en masse desdites particules d'arôme encapsulé se trouve dans les 50-200% de celui des autres particules comprises dans le matériau d'aliment ou de boisson particulaire.

9. Composition d'aliment ou de boisson particulaire aromatisée selon la revendication 8, dans laquelle lesdites particules d'arôme encapsulé possèdent sensiblement la même forme que les autres particules comprises dans le matériau d'aliment ou de boisson particulaire.

10. Composition d'aliment ou de boisson particulaire aromatisée selon l'une quelconque des revendications 7-9, dans laquelle les particules de cœur comprises dans les particules d'arôme encapsulé sont du même type de matériau que celui desdites autres particules comprises dans ladite composition d'aliment ou de boisson particulaire.

11. Composition d'aliment ou de boisson particulaire aromatisée selon l'une quelconque des revendications 7-10, dans laquelle le revêtement externe des particules d'arôme encapsulé comprend un extrait dudit matériau d'aliment ou de boisson particulaire.

12. Composition d'aliment ou de boisson particulaire aromatisée selon l'une quelconque des revendications 7-11, dans laquelle ledit matériau d'aliment ou de boisson particulaire est choisi dans le groupe constitué par le thé, le café moulu, le café en poudre, les compositions de cacao, les assaisonnements, les boissons en poudre et les desserts en poudre.

13. Méthode de production d'une particule d'arôme selon l'une quelconque des revendications 1-6, comprenant le revêtement de la particule de cœur par le premier revêtement comprenant la matrice véhicule d'arôme et l'agent aromatisant, et le revêtement de ladite particule de cœur à revêtement d'arôme par la couche de revêtement supplémentaire comprenant au moins 80% en poids de l'extrait du matériel végétal.

14. Méthode selon la revendication 13, dans laquelle ladite couche de revêtement supplémentaire est appliquée sous la forme d'un extrait liquide concentré dudit matériel végétal.

15. Méthode selon la revendication 13 ou 14, dans laquelle ladite couche de revêtement externe est appliquée par revêtement en lit fluidisé, séchage au cylindre, granulation à cisaillement élevé ou extrusion.

16. Méthode destinée à l'amélioration de l'arôme d'un matériau d'aliment ou de boisson naturel particulaire comprenant des particules ayant un diamètre moyen pondéré en masse dans la plage de 50-5000 µm, la méthode comprenant l'incorporation dans ladite composition d'une quantité suffisante de particules d'arôme telles que définies selon l'une quelconque des revendications 1-6.
